# EUROPEAN PATENT APPLICATION

(11) **EP 1 427 198 A2**
(43) Date of publication of application: **09.06.2004**
(21) Application number: 03025157.3
(22) Date of filing: 03.11.2003
(51) Int. Cl.: H04N 5/45

(54) **Multi-mode imaging apparatus**

(30) Priority: 28.11.2002 KR 2002074893
(71) Applicant: SAMSUNG ELECTRONICS CO. LTD., Suwon-city, Kyungki-do (KR)
(72) Inventor: Lee, Yong-hyun, Youngtong-gu Suwon-city Gyunggi-do (KR)
(74) Representative: Geary, Stuart Lloyd

(57) **Abstract**

The present invention relates to a dual mode signal processing apparatus using a picture-in-picture (PIP) window. In particular, the present invention relates to a display apparatus and a function switching apparatus that display two views for DSPs performing different functions in use of a PIP window so that two functions are simultaneously performed. In order to achieve the such an object, embodiments of the present invention comprise at least one or more digital signal processors (DSPs) for processing different signals; a picture-in-picture(PIP) block for inputting a composite image signal, a chrominance signal, and so on, mixing two signals, and outputting one composite signal; a first signal switching means for selecting an input of signals of the plural DSPs and outputting the selected signal to the PIP block; a second signal switching means for selecting a composite image signal outputted from the DSPs and outputting the selected composite image signal to the PIP block; and a display unit for inputting and displaying an output signal of the PIP block. The embodiments further employ an input unit having a mode selection button and PIP-related function buttons; and a control unit for switching signals with an input of the input unit and controlling a system. Accordingly, embodiments of the present invention convert the function of the system by changes of the main view and the PIP window in the mixed display from two mixed image signals, and enables the same functions to operate with one button selection, to thereby perform combined functions with simplicity.

## Description

The present invention relates to a multi-mode imaging apparatus comprising still image capturing means, moving image capturing means, first and second signal processors for processing still image and moving image signals from the capturing means and a display for displaying images in dependence on the outputs of said signal processors.

Digital signal processors (DSP) are widely used to process digital signals in real time. DSPs are used in diverse products including audio systems such as small-sized disc players, wireless communication systems such as cellular phones, digital stills cameras (DSCs), and digital video camcorders (DVCs).

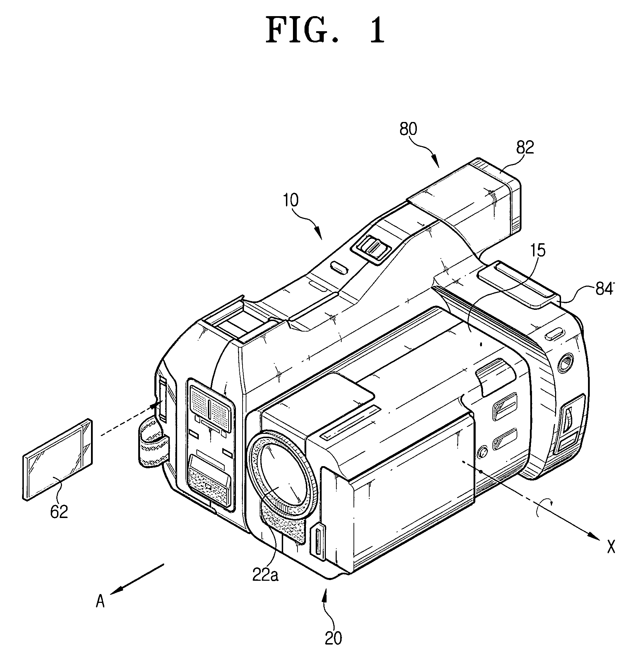

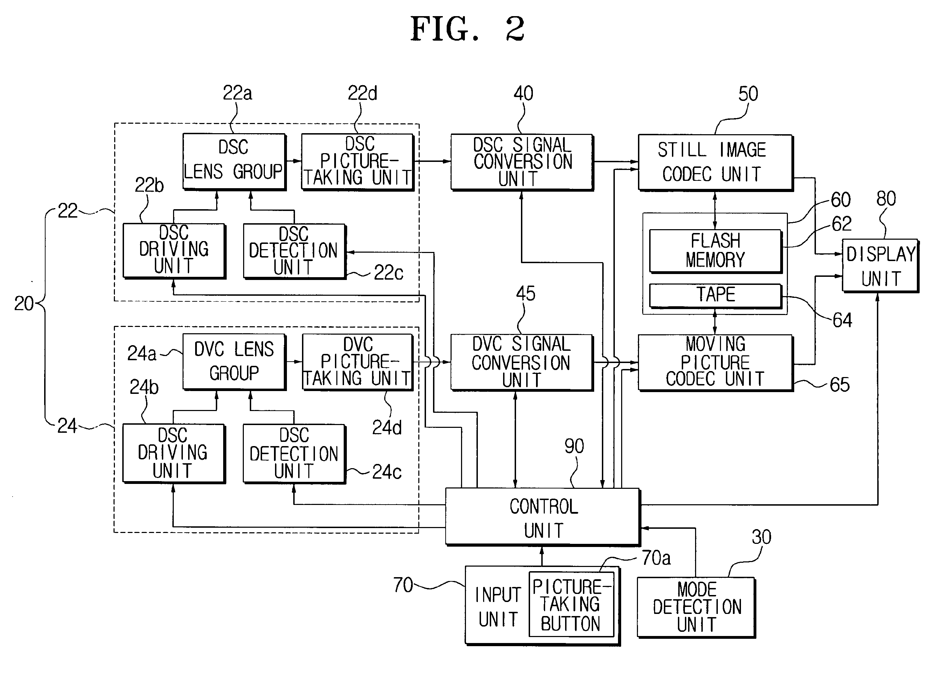

Figure 1 is a perspective view of a conventional combined DSC and DVC apparatus and Figure 2 is a block diagram of the apparatus of Figure 1.

Referring to Figures 1 and 2, a main body of the picture-taking apparatus has a DSC signal conversion unit 40, a DVC signal conversion unit 45, a still image codec unit 50, a moving picture codec unit 65, a storage unit 60, an input unit 70, a display unit 80 and a control unit 90 therein.

A camera part 20 is provided with a rotatably mounted housing 15, a first camera 22 for taking still images and a second camera 24 for taking moving pictures. Ordinarily, the first camera 22 and the second camera 24 (not visible in Figure 1) are disposed opposite to each other in the camera part 20.

Accordingly, the camera part 20 can be rotated through a certain angle clockwise or anticlockwise about an axis X. The DSC lens group 22a and the DVC lens group 24a rotate along with camera part 20 and remain parallel to the picture-taking direction A. That is, when the housing 15 is manually swivelled by 180° or substantially 180° as shown in Figure 1, the positions of the DSC lens group 22a and the DVC lens group 24a are interchanged.

Referring to Figure 2, the first camera 22 has the DSC lens group 22a, a DSC driving unit 22b, a DSC detection unit 22c and a DSC picture-taking unit 22d. The DSC lens group 22a is for taking still images and the DSC driving unit 22b moves a DSC zoom lens (not shown) and a DSC focus lens (not shown) under the control of the control unit 90.

The DSC detection unit 22c is a sensor for detecting lens positions under the control of the control unit 90. DSC picture-taking unit 22d converts an optical image signal produced by the DSC zoom lens (not shown) and the DSC focus lens (not shown) into an electronic image signal using a charge coupled device (not shown).

The second camera 24 has the DVC lens group 24a, a DVC driving unit 24b, a DVC detection unit 24c, and a DVC picture-taking unit 24d the operations of which are substantially the same as those of the first camera.

The DSC signal conversion unit 40 and the DVC signal conversion unit 45 remove noise from the electronic image signals from the DSC picture-taking unit 22d and the DVC picture-taking unit 24c, and amplify them such that the image signals are output uniformly. Furthermore, the DSC signal conversion unit 40 and the DVC signal conversion unit 45 respectively digitise the analogue image signals, process the digital image signals and output automatic control data.

The still image codec unit 50 compresses still image signals from the DSC signal conversion unit 40 under the control of the control unit 90 using a compression process such as JPEG. The compressed still image data is stored in a flash memory 62 in the storage unit 60.

The moving picture codec unit 65 compresses moving-picture signals output from the DVC signal conversion unit 45 using a compression process such as MPEG under the control of the control unit 90. The compressed moving-picture data is stored on a tape 64.

If a reproduction command signal for a stored image signal is input from the input unit 70, the still image codec unit 50 and the moving picture codec unit 55 decompress the compressed image signals stored in the flash memory 62 and the tape 64 as necessary.

For example, if a reproduction command signal for a still image is input from the input unit 70, the still image codec unit 50 decompresses the compressed still image signal stored in the flash memory 62 and outputs the decompressed data to the display unit 80.

The input unit 70 has a picture-taking button 70a and a plurality of control buttons (not shown) for applying a picture-taking command signal and other command signals to the control unit 90.

The display unit 80 has a view finder 82 or an LCD panel 84 provided on one side of the main body 10. The display unit 80 displays images captured through the DSC 22 or the DVC 24, or decompressed images according to the controls of the control unit 90.

The control unit 90 controls the overall operation of the picture-taking apparatus using automatic control data output from various control programs stored in the storage unit 60 and the DSC signal conversion unit 40 or the DVC signal conversion unit 45.

The control unit 90 determines the current picture-taking mode from the output signal of the mode detection unit 30 and drives the camera part 20 accordingly. For example, if a signal indicating that the DSC 22 is turned on and that the DVC 24 is turned off is input, the control unit 90 determines that the camera unit 20 is in still image mode.

Furthermore, if a picture-taking command signal is input from the picture-taking button 70a, the control unit 90 drives the DSC 22 in accordance with the still image mode. If the control unit 90 is applied with a recording command signal from the input unit 70, the control unit 90 controls the still image codec unit 50 to compress the image signal and, if the control unit 90 inputs a reproduction command signal, the control unit 90 controls the still image codec unit 50 to decompress a compressed image signal and displays the decompressed image signal on the display unit 80.

The combination of the DSC and the DVC as described above increases the number of control buttons so that the combined product becomes complicated, causing difficulties in use.

A multi-mode image imaging apparatus according to the present invention is characterised by a PIP signal mixer having main and window signal inputs, a first switching means for selectively outputting output signals of the first and second signal processors to the main signal input of the PIP signal mixer, a second switching means for selectively outputting output signals of the first and second signal processors to the window signal input of the PIP signal mixer.

The apparatus preferably includes control means configured for controlling the switching means such that they output signals output by respective ones of said signal processors.

Preferably, the first and second signal processors each have component and composite video signal outputs, the first switching means selects between the component video signal outputs and the second switching means selects between the composite video signal outputs.

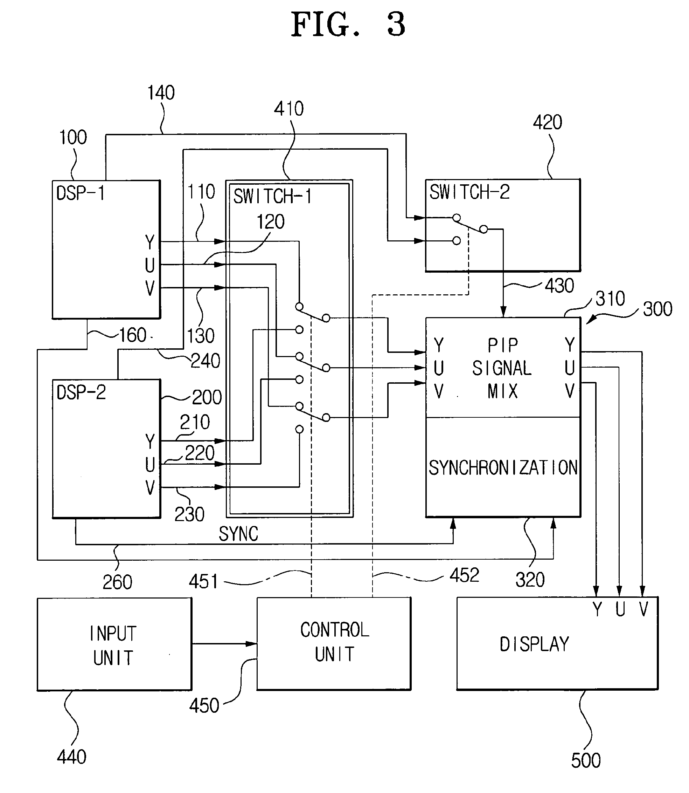

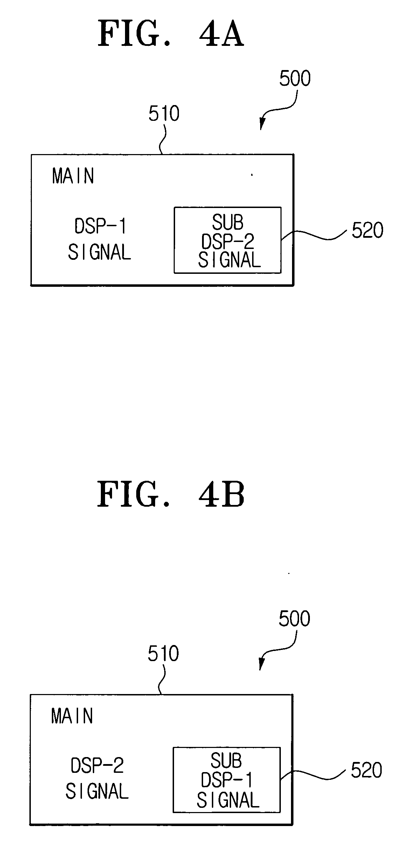

An embodiment of the present invention will now be described, by way of example, with reference to Figures 3 and 4 of the accompanying drawings in which:
Figure 1 is a perspective view of a conventional combined still and video picture-taking apparatus ;
Figure 2 is a block diagram of the conventional picture-taking apparatus of Figure 1;
Figure 3 is a block diagram illustrating a dual mode signal processing apparatus according to the present invention; and
Figure 4 illustrates a main picture/sub-picture switchover process according to the present invention.

Where the present embodiment is similar to the apparatus shown in Figure 2, reference will be made to Figure 2 to avoid unnecessary repetition.

Referring to Figure 3, a dual mode signal processing apparatus using PIP windows according to the present invention has a first DSP unit 100 for a digital stills camera, a signal DSP unit 200 for a digital video camcorder, a first signal switching unit 410, a second signal switching unit 420, a PIP block 300, a display unit 500, an input unit with control buttons 440, and a control unit 450.

The first DSP unit 100 and the second DSP unit 200 process digital signals for the digital stills camera and the digital video camcorder, respectively, and output the processed digital signals to the PIP block 300. The first DSP unit and the second DSP unit each have Y, U and V terminals for the inputting and outputting of main picture signals from and to the PIP block 300. The YUV format a colour display format used for TVs in Europe. The first DSP unit and the second DSP unit have Y terminals 110, 210 for luminance signals and U and V terminals 120, 130, 220, 230 for chrominance signals and output the signals to the first signal switching unit 410.

The first DSP unit 100 and the second DSP unit 200 have composite image signal output terminals 140, 240 respectively for a sub-picture output signal for the PIP window. The output terminals 140, 240 are connected to the second signal switching unit 420. The first DSP unit 100 and the second DSP unit 200 have synchronous signal output terminals 160, 260 that are connected to the PIP block 300 so that a synchronisation signal is available for synchronization adjustments while a main picture and a sub-picture are being displayed according to the controls of the controller 450.

The first signal switching unit 410 is a switch for selecting YUV signals for the main picture from outputs of the first DSP unit 100 and the second DSP unit 200 and outputting the selected YUV signals to the PIP block 300.

The second signal switching unit 420 is a switch for selecting composite image signals 140, 240 for the sub-picture from outputs of the first DSP unit 100 and the second DSP unit 200 and outputting the selected composite image signal to the PIP block 300.

The PIP block 300 generally has a PIP signal processor 310 for processing signals to form a PIP window and a synchronization unit 320 for controlling synchronization for the main picture and the sub-picture in the PIP window. The PIP signal processor 310 inputs the YUV signals for the main picture from the first signal switching unit 410, and inputs a signal for the sub-picture from the second signal switching unit 420 via an sub-signal input terminal 430.

The output of the first signal switching unit 420 is sent directly to the display unit 500 for the main display and, for a PIP window, the control unit 450 controls the synchronization of the synchronization unit 320 to output a mixed display comprising the main picture and the sub-picture.

The input unit 440 may have a button (not shown) for selecting a DSC mode and a DVC mode, a system control button for recording and reproduction and PIP window-related buttons.

The control unit 450 receives signals caused by operation of selected buttons of the input unit 440 and outputs a control signal 451 for controlling the first signal switching unit 410 and a control signal 452 for switching the second signal switching unit 420. Additionally, the control unit 450 receives signals caused by operation of selected PIP window-related buttons, and performs functions controlling the overall system.

The operation of the dual mode signal processing apparatus using a PIP window will now be described.

In non-PIP mode, if a user selects the DSC mode through the input unit 440, the control unit 450 outputs the switch control signal 451 so that the first signal switching unit 410 selects the YUV terminals of the first DSP unit 100. Preferably, the mode selection can be made by a rotary contact switch operable without any button being pressed. That is, the rotary contact switch (not shown) can detect the picture-taking mode according to the angular position the camera part 20 with respect to the main body 10 of Figure 1. It is more preferable that each mode be active for respective 180° ranges of the camera part's rotation. The PIP block 300 is supplied with the YUV signals 110, 120, 130 from the first DSP unit 100 and outputs the YUV signals for display on the display unit 500, so that a user can enjoy displays in the DSC mode.

If, however, the DVC mode has been selected, the control unit 450 outputs the switch control signal 451 so that the first signal switching unit 420 selects the output terminals Y, U, V of the second DSP unit 200. The PIP block 300 is supplied with the Y, U, and V signals 210, 220, 230 of the second DSP unit 200 and outputs the Y, U, and V signals for display on the display unit 500, so that a user can enjoy displays in the DVC mode.

If a user presses a PIP window switching button (not shown) on the input unit 440 while the camera is in the DSC mode, the control unit 450 controls the second signal switching unit 420 so that the composite image signal 240 of the second DSP unit 200 is sent to the auxiliary signal input terminal 430 of the PIP block 300. Accordingly, the PIP block 300 processes the Y, U, and V signals of the first DSP unit 100 from first signal switching unit 410 to provide the main picture of the mixed display, and processes the composite image signal 240 of the second DSP unit 200 from the auxiliary signal input terminal 430 of the second signal switching unit 420 for the PIP window of the mixed display (see Figure 4A). The main view and the PIP window are synchronized for output with reference to a synchronization signal from the synchronization unit 320.

Figure 4 show displays with a PIP window on the display unit 500. Figure 4A shows the situation where the main view is provided by the first DSP unit signal, i.e. the DSC signal, with the sub-window is provided by the sub-first DSP unit signal, i.e. the DVC signal. Figure 4B shows the situation where the main view is provided by the second DSP unit signal, i.e. the DVC signal, with the sub-window is provided by the sub-second DSP unit signal, i.e. the DSC signal.

In such a display, if a user operates a main/sub-picture switchover button (not shown) to switch between the case shown in Figure 4A and the case shown in Figure 4B, the control unit 450 controls the first signal switching unit to select the Y, U, and V signals of the second DSP unit 200 and controls the second signal switching unit to output the composite image signal 140 from the first DSP unit 100 to the output terminal 430, so that the PIP block 300 outputs the Y, U, and V signals 210, 220, 230 of the second DSP unit 200 for the main view and outputs the composite image signal 140 of the first DSP unit 100 for the PIP window.

Embodiments of the present invention are advantageous for users, in part because the users can avoid confusion if various function buttons such as zoom function are activated in the main picture of the mixed display.

Furthermore, if a user selects a PIP window switching button (not shown) through the input unit 440 during watching displays in the DVC mode, the same operations are repeated so that the second signal switching unit 420 processes the composite image signal 140 of the first DSP unit 100 for the sub-picture to output the mixed display. Also, if the user selects a main/sub-picture switchover button (not shown), the control unit 450 controls the first signal switching unit to be switched to select the Y, U, and V signals of the first DSP unit 100, and also the second signal switching unit to be switched to output the composite image signal 240 of the second DSP unit 200 to the input terminal 430, so that the PIP block 300 outputs the Y, U, and V signals 110, 120, and 130 of the first DSP unit 100 for the main view, and outputs the composite image signal 240 of the second DSP unit 200 for the PIP window.

As above, the dual mode signal processing apparatus using a PIP window according to an embodiment of the present invention converts the function of the system by changes of the main picture and the sub-picture in the mixed display from two mixed image signals, and enables the same functions to operate with one button selection, to thereby perform combined functions with simplicity.

## Claims

1. A multi-mode imaging apparatus comprising:
still image capturing means (24);
moving image capturing means (22);
first and second signal processors (100, 200) for processing still image and moving image signals from the capturing means (22, 24); and
a display (500) for displaying images in dependence on the outputs of said signal processors (100, 200),
**characterised by**
a PIP signal mixer (300) having main and window signal inputs;
a first switching means (410) for selectively outputting output signals of the first and second signal processors (100, 200) to the main signal input of the PIP signal mixer (300);
a second switching means (420) for selectively outputting output signals of the first and second signal processors (100, 200) to the window signal input of the PIP signal mixer (300).

2. An apparatus according to claim 1, including control means (440, 450) configured for controlling the switching means such that they output signals output by respective ones of said signal processors (100, 200).

3. An apparatus according to claim 1 or 2, wherein the first and second signal processors (100, 200) each have component and composite video signal outputs, the first switching means (410) selects between the component video signal outputs and the second switching means (420) selects between the composite video signal outputs.

4. An apparatus for controlling a display of a combined digital video camcorder (DVC) and digital stills camera (DSC) comprising:
a first digital signal processor adapted to output a component output signal to a first input of a component switch and a composite output signal to a first input of a composite switch;
a second digital signal processor adapted to output a component output signal to a second input of said component switch and a composite output signal to a second input of said composite switch;
a picture-in-picture (PIP) signal mixing unit adapted to receive a selected output from said component switch and a selected output from said composite switch, and to generate a display output signal based on said selected output from said component switch and said selected output from said composite switch; and
a control unit adapted to control said component switch and said composite switch based on an input signal from an input unit.

5. The apparatus of claim 4, wherein said control unit is further adapted to control said PIP signal mixing unit to enter a PIP-mode, and to thereby generate a PIP output comprising a main image based on said selected output from said component switch and a sub-window image based on said selected output from said composite switch.

6. The apparatus of claim 4, wherein said control unit is further adapted to control said PIP signal mixing unit to enter a general mode, and to thereby generate a PIP output comprising a main image based on said selected output from said component switch.

7. The apparatus of claim 4, wherein said control unit is further adapted to control said component switch and said composite switch in a first mode, in which said component output signal of said first digital signal processor is selected by said component switch and said composite output of said second digital signal processor is selected by said composite switch, or in a second mode, in which said component output of said second digital signal processor is selected by said component switch and said composite output of said first digital signal processor is selected by said composite switch.

8. The apparatus of claim 4, wherein each said component output signals comprises at least one luminance signal and at least two chrominance signals.

9. The apparatus of claim 4, wherein said input unit comprises a PIP-mode selection switch.

10. The apparatus of claim 4, wherein said input unit comprises a PIP swap switch.

11. A method of controlling a display of a combined digital video camcorder (DVC) and digital stills camera (DSC) comprising the steps of:
selecting a component output of a first digital signal processor and a composite output of a second digital signal processor when said camera is in a first mode;
selecting a component output of said second digital signal processor and a composite output of said first digital signal processor when said camera is in a second mode; and
generating a picture-in-picture (PIP) output display comprising the selected component output signal combined with a sub-window generated from the selected composite output signal.

12. The method of claim 11, further comprising the steps of:
receiving a swap command from an input unit; and
switching between said first mode and said second mode in response to said swap command.

13. The method of claim 11, further comprising the steps of:
receiving a PIP-mode selection command; and
generating said picture-in-picture (PIP) output display comprising only the selected component output signal in response to said PIP-mode selection command.

14. The method of claim 11, wherein each of said component output signals comprises at least one luminance signal and at least two chrominance signals.
